# EUROPÄISCHE PATENTANMELDUNG

(11) **EP 2 940 326 A1**
(43) Veröffentlichungstag der Anmeldung: **04.11.2015**
(21) Anmeldenummer: 15164636.1
(22) Anmeldetag: 22.04.2015
(51) Int. Cl.: F16C 29/12, F16C 29/02

(54) **PROFILGLEITER, HUBSÄULE UND VERFAHREN ZUM MONTIEREN EINER HUBSÄULE**

(30) Priorität: 28.04.2014 DE 102014207930
(71) Anmelder: Aktiebolaget SKF, 415 50 Göteborg (SE)
(72) Erfinder: Panzer, Hans-Peter, 79540 Lörrach (DE)
(74) Vertreter: Kuhstrebe, Jochen

(57) **Zusammenfassung**

Ein Profilgleiter (100) gemäß einem Ausführungsbeispiel zum linearen Führen eines Profilelements (310) relativ zu einem weiteren Profilelement (310) bezüglich einer Bewegungsrichtung (190) ist ausgebildet, um an dem Profilelement (310) befestigt zu werden und um mit einer Führungsfläche (340) einer Führungsnut (320) des weiteren Profilelements (310) in Kontakt zu stehen, wobei der Profilgleiter (100) ferner ausgebildet ist, um auf einen Abstand der Führungsfläche (340) der Führungsnut (320) zu einer weiteren Führungsfläche (340) der Führungsnut (320) einstellbar zu sein. Hierdurch kann ggf. ein Kompromiss hinsichtlich herstellungsbedingter Variationen und einer möglichst einfachen Herstellung und Montage verbessert werden.

## Beschreibung

Ausführungsbeispiele beziehen sich auf einen Profilgleiter, eine Hubsäule und ein Verfahren zum Montieren einer Hubsäule.

Profilelemente werden in einer Vielzahl von technischen Anwendungsgebieten eingesetzt. So umfassen die Profilelemente beispielsweise Profilrohre, Hubsäulenelemente und andere profilierte Bauteile, mit welchen beispielsweise eine mechanische Ausrichtung, ein Transport oder eine andere Bewegung eines Objekts im Raum ermöglicht wird. So werden bei solchen Anwendungen häufig einzelne Profilelemente zueinander linear bewegt.

Dies stellt technisch häufig die Herausforderung, eine Führung der betreffenden Profilelemente zueinander zu implementieren. Bei einer solchen Führung ist also eine möglichst reibungsarme bzw. sogar reibungsfreie Bewegung der Profilelemente zueinander entlang einer Bewegungsrichtung gewünscht, während in einer von der Bewegungsrichtung unterschiedlichen Richtung der beteiligten Profilelemente eine Bewegung dieser Elemente zueinander unterbunden werden soll. Entlang einer solchen Richtung kann durch eine entsprechende Implementierung einer Lagerung also eine Kraft von dem einen Bauteil auf das andere ausgeübt werden, wohingegen dies entlang der Bewegungsrichtung möglichst unterbunden werden soll.

Eine technische Möglichkeit, eine solche Lagerung zu implementieren, besteht wenigstens teilweise darin, eine Gleitlagerung zu implementieren.

Die verwendeten Komponenten können hierbei zum Beispiel herstellungsbedingt oder aufgrund anderer Umstände Variationen und Toleranzen aufweisen, welche bei der Montage der Komponenten zu einem größeren System oder einer Baugruppe berücksichtigt werden sollten, um beispielsweise eine Funktionssicherheit, eine Zuverlässigkeit oder auch nur ein Komfortempfinden eines Benutzers nicht nachteilig zu beeinflussen. Unabhängig hiervon steht bei der Herstellung und Montage einer solchen Baugruppe oder eines solchen Systems eine möglichst einfache und damit ggf. kostengünstige Fertigung jedoch ebenso im Vordergrund.

Bei Profilelementen wird so beispielsweise eine Gleitlagerung derselben zueinander mit Hilfe von Profilgleitern realisiert, die beispielsweise auf entsprechenden Führungsflächen gleiten und mit diesen in Kontakt stehen. Je nach dem für welche Anwendung entsprechende Profilelemente vorgesehen sind, kann hier beispielsweise eine ungenügende Berücksichtigung von Toleranzen und Spiel zu einem Versagen einer entsprechenden Einheit bzw. auch zu einer von dem Benutzer als unangenehm empfundenen Entwicklung von Geräuschen oder anderen Problemen führen. Entsprechende Profilelemente können beispielsweise bei Hubsäulen zum Einsatz kommen, wie sie beispielsweise bei Werkzeugmaschinen ebenso wie bei medizinischen Geräten verwendet werden. Ähnliche Herausforderungen sind jedoch bei weitem nicht auf die genannten Anwendungsgebiete beschränkt.

Es besteht daher ein Bedarf daran, einen Kompromiss hinsichtlich herstellungsbedingter Variationen und einer möglichst einfachen Herstellung und Montage zu verbessern.

Diesem Bedarf tragen ein Profilgleiter gemäß Patentanspruch 1, eine Hubsäule gemäß Patentanspruch 9 und ein Verfahren zum Montieren einer Hubsäule gemäß Patentanspruch 10 Rechnung.

Ein Profilgleiter gemäß einem Ausführungsbeispiel zum linearen Führen eines Profilelements relativ zu einem weiteren Profilelement bezüglich einer Bewegungsrichtung ist hierbei ausgebildet, um an dem Profilelement befestigt zu werden, wobei der Profilgleiter ferner ausgebildet ist, um mit einer Führungsfläche einer Führungsnut des weiteren Profilelements in Kontakt zu stehen. Der Profilgleiter ist darüber hinaus ausgebildet, um auf einen Abstand der Führungsfläche der Führungsnut zu einer weiteren Führungsfläche der Führungsnut einstellbar zu sein.

Eine Hubsäule gemäß einem Ausführungsbeispiel umfasst ein Profilelement, ein weiteres Profilelement, das eine Führungsnut mit einer Führungsfläche aufweist und relativ zu dem Profilelement entlang einer Bewegungsrichtung bewegbar ist, sowie wenigstens einen Profilgleiter gemäß einem Ausführungsbeispiel, der an dem Profilelement befestigt ist und so angeordnet ist, dass der wenigstens eine Profilgleiter mit der Führungsfläche der Führungsnut des weiteren Profilelements in Kontakt steht.

Ein Verfahren gemäß einem Ausführungsbeispiel zum Montieren einer Hubsäule umfasst ein Befestigen eines Profilgleiters an einem Profilelement, ein wenigstens teilweise Einbringen des Profilgleiters in eine Führungsnut eines weiteren Profilelements, das bezüglich einer Bewegungsrichtung relativ zu dem Profilelement bewegbar ist, und eine Einstellen des Profilgleiters, um diesen mit einer Führungsfläche der Führungsnut des weiteren Profilelements in Kontakt zu bringen und um diesen auf einen Abstand der Führungsfläche zu einer weiteren Führungsfläche der Führungsnut einzustellen.

Einem Ausführungsbeispiel liegt so die Erkenntnis zugrunde, dass einerseits eine Berücksichtigung von herstellungs- und montagebedingten Variationen sowie einer Vereinfachung einer Herstellung entsprechender Einheiten und Systeme dadurch erreicht werden kann, indem ein Profilgleiter zum Einsatz kommt, welcher auf einen Abstand der Führungsfläche der Führungsnut zu der weiteren Führungsfläche der Führungsnut einstellbar ist. Durch die Einstellbarkeit kann hier eine leichtere und schnellere Montage eines größeren Systems, wie beispielsweise einer Hubsäule, erzielbar sein.

Der Profilgleiter kann so optional eine Vorzugsrichtung aufweisen, welche in Bezug auf die Bewegungsrichtung des Profilelements zu dem weiteren Profilelement eine vorbestimmte Beziehung aufweist. Die vorbestimmte Richtung des Profilgleiters kann so beispielsweise mit der Bewegungsrichtung übereinstimmen, mit dieser jedoch beispielsweise auch einen vorbestimmten Winkel einschließen. Je nach genauer Implementierung eines Profilgleiters kann so dieser beispielsweise eine entsprechende Markierung oder Struktur aufweisen, welche eine Montage des Profilgleiters in dieser Ausrichtung vereinfacht oder ermöglicht. So kann der Profilgleiter optional beispielsweise eine Befestigungsstruktur aufweisen, die ausgebildet ist, um den Profilgleiter an dem Profilelement befestigbar zu machen. Diese kann optional so ausgestaltet sein, dass der Profilgleiter rotationsfest bzw. drehfest und/oder ortsfest befestigbar ist.

Die Bewegungsrichtung kann hierbei eine konstruktiv vorgegebene Richtung darstellen. Diese kann beispielsweise durch das Profilelement und/oder das weitere Profilelement vorgegeben sein. So kann beispielsweise die Bewegungsrichtung durch einen Verlauf der Führungsnut bestimmt sein. Trotz des Wortbestandteils "Richtung" kann es sich bei den einzelnen "Richtungen" im vorliegenden Fall nicht notwendigerweise um eine Richtung im mathematischen Sinne eines Vektors, sondern um eine Linie handeln, entlang derer die entsprechende Bewegung erfolgt. Eine solche Linie kann geradlinig, jedoch auch gebogen sein. Abzugrenzen sind hier Richtungen, die tatsächlich Richtungen entlang einer Linie, beispielsweise der Bewegungsrichtung, beschreiben. So kann beispielsweise eine erste Richtung einer zweiten Richtung entgegengerichtet sein, beide jedoch entlang einer auch als "Richtung" bezeichneten Linie verlaufen oder gerichtet sein.

Optional kann ein Profilgleiter gemäß einem Ausführungsbeispiel ausgebildet sein, um auf den Abstand der Führungsfläche zu der weiteren Führungsfläche nach dem Befestigen des Profilgleiters an dem Profilelement demontagefrei einstellbar zu sein. Hierdurch kann es möglich sein, die Herstellung bzw. Montage eines Systems, welches die beiden genannten Profilelemente umfasst, ggf. noch weiter zu vereinfachen. So kann beispielsweise der Profilgleiter zur Implementierung der Einstellbarkeit durch eine Öffnung, Ausnehmung oder eine andere entsprechende Struktur in dem Profilelement und/oder dem weiteren Profilelement zugänglich sein.

Ergänzend oder alternativ kann ein Profilgleiter gemäß einem Ausführungsbeispiel ausgebildet sein, um entlang einer senkrecht zu der Bewegungsrichtung verlaufenden Richtung bei Druckbeanstandung im Wesentlichen formstabil zu sein. Hierdurch kann es möglich sein, im Zusammenhang mit der Einstellbarkeit des Profilgleiters eine im Wesentlichen spielfreie Montage und Führung der betreffenden Profilelemente zueinander zu ermöglichen. Eine im Wesentlichen formstabile Implementierung kann beispielsweise eine formstabile Implementierung umfassen. Optional kann der Profilgleiter beispielsweise in einem eingestellten Zustand des Profilgleiters formstabil bzw. im Wesentlichen formstabil sein.

Ergänzend oder alternativ kann ein Profilgleiter gemäß einem Ausführungsbeispiel ausgebildet sein, um die lineare Führung im Wesentlichen frei von einer Bewegung des Profilelements relativ zu dem weiteren Profilelement senkrecht zu der Bewegungsrichtung zu bewirken. Dies kann beispielsweise durch die zuvor beschriebene formstabile Auslegung des Profilgleiters bei Druckbeanspruchung erfolgen.

Ergänzend oder alternativ kann ein Profilgleiter gemäß einem Ausführungsbeispiel ausgebildet sein, um gleichzeitig mit der Führungsfläche und der weiteren Führungsfläche der Führungsnut in Kontakt zu stehen. Hierdurch kann es möglich sein, eine Zahl vorzuhaltender Bauteile, also beispielsweise von Profilgleitern, zu reduzieren, indem diese zur Führung entlang beider antiparallel zueinander liegenden Richtungen senkrecht zu der Bewegungsrichtung verwendet werden. Hierdurch kann es möglich sein, wiederum die Herstellung bzw. Montage eines entsprechenden Systems zu vereinfachen. Optional kann ein solcher Profilgleiter beispielsweise ausgebildet sein, um im Wesentlichen gleichzeitig oder gleichzeitig mit der Führungsfläche und der weiteren Führungsfläche in Kontakt zu stehen.

Optional kann ein solcher Profilgleiter gemäß einem Ausführungsbeispiel eine Führungsstruktur und eine Einstellstruktur aufweisen, wobei die Führungsstruktur ausgebildet ist, um mit der Führungsfläche und der weiteren Führungsfläche in Kontakt zu stehen. Die Einstellstruktur kann in diesem Fall ausgebildet sein, um eine Position einer Gleitfläche der Führungsstruktur, die ausgebildet ist, um mit der Führungsfläche in Kontakt zu treten, und einer weiteren Gleitfläche der Führungsstruktur, die ausgebildet ist, um mit der weiteren Führungsfläche in Kontakt zu treten, einstellbar zu machen. Mit Hilfe einer solchen Implementierung kann es ggf. möglich sein, mit konstruktiv einfachen Mitteln eine entsprechende Führung zu ermöglichen.

Optional kann bei einem Profilgleiter gemäß einem Ausführungsbeispiel die Führungsstruktur bezüglich der Bewegungsrichtung im Wesentlichen symmetrisch ausgebildet sein. Hierdurch kann es ggf. möglich sein, eine Montage zu vereinfachen. Alternativ oder ergänzend kann es hierdurch ebenfalls möglich sein, eine Belastung der Befestigung des Profilgleiters an der Profilstruktur zu reduzieren. Ergänzend oder alternativ kann es hierdurch ebenso möglich sein, eine gleichmäßigere Belastung zu erzielen oder eine Belastbarkeit des Profilgleiters hinsichtlich seiner Führungsfähigkeit zu erhöhen. Optional kann der Profilgleiter beispielsweise auch so ausgebildet sein, dass dieser im Wesentlichen symmetrisch bei allen Einstellbedingungen ist.

Eine Komponente kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie werden hierbei als Rotationssymmetrie bzw. Symmetrie bezeichnet.

Ergänzend oder alternativ können bei einem Profilgleiter gemäß einem Ausführungsbeispiel mit einer Einstellstruktur und einer Führungsstruktur diese so ausgebildet sein, um ausgehend von einer Grundstellung, in der die Gleitfläche und die weitere Gleitfläche einen kleinsten Abstand voneinander aufweisen, den Abstand zwischen der Gleitfläche und der weiteren Gleitfläche durch das Einstellen zu vergrößern. Hierdurch kann es möglich sein, den Profilgleiter in einem im Wesentlichen kraftfreien Zustand zu montieren und durch ein späteres Einstellen an die herrschenden geometrischen Bedingungen der Profilstruktur und der weiteren Profilstruktur anzupassen.

Optional kann bei einem solchen Profilgleiter gemäß einem Ausführungsbeispiel die Führungsstruktur elastisch ausgebildet sein, um eine Vergrößerung des Abstands der Gleitfläche von der weiteren Gleitfläche zu ermöglichen. Hierdurch kann es möglich sein, eine Herstellung des Profilgleiters durch Verwendung eines entsprechenden elastischen Materials weiter zu vereinfachen, da auch so der Profilgleiter mit einer geringeren Anzahl von Einzelteilen gefertigt werden kann. Ergänzend oder alternativ kann durch die Verwendung eines elastischen Materials in den entsprechenden Bereichen auch eine Widerstandsfähigkeit bzw. Belastbarkeit des Profilgleiters verbessert werden.

Ergänzend oder alternativ können bei einem Profilgleiter gemäß einem Ausführungsbeispiel die Einstellstruktur und die Führungsstruktur jeweils eine Verzahnungsstruktur aufweisen, über die die Einstellstruktur und die Führungsstruktur ineinander eingreifen, um den Abstand der Gleitfläche von der weiteren Gleitfläche einstellbar zu machen. Durch die Implementierung einer Verzahnungsstruktur kann es ggf. möglich sein, eine definiertere Einstellung des Profilgleiters zu erzielen. Ebenso oder alternativ kann es möglich sein, eine Belastbarkeit des Profilgleiters dadurch zu erhöhen, dass eine Gefahr reduziert wird, dass durch eine entsprechende Druckbelastung die Einstellstruktur zu der Führungsstruktur ihre Position während des Betriebs in unbeabsichtigter Art und Weise ändert. Anders ausgedrückt kann es möglich sein, eine stabilere Konfiguration des Profilgleiters durch eine Art Verrastung oder Rastung der Einstellstruktur zu der Führungsstruktur zu erzielen.

Optional kann eine Hubsäule gemäß einem Ausführungsbeispiel ferner eine Antriebseinheit aufweisen, die ausgebildet ist, um das Profilelement relativ zu dem weiteren Profilelement zu bewegen. Mit Hilfe einer solchen Antriebseinheit kann es so ggf. möglich sein, eine automatisierte Bewegung umzusetzen.

Optional kann bei einer solchen Hubsäule gemäß einem Ausführungsbeispiel die Antriebseinheit einen Motor aufweisen, der ausgebildet ist, um eine Welle in eine Rotationsbewegung zu versetzen. Die Antriebseinheit kann ferner ein Schraubgetriebe umfassen, das ausgebildet ist, um die Rotationsbewegung des Motors in eine lineare Bewegung entlang der Bewegungsrichtung umzusetzen. Gleiches gilt ggf. auch für eine lineare Bewegung entgegen der Bewegungsrichtung. Optional kann der Motor beispielsweise einen Elektromotor umfassen oder es sich bei diesem um einen solchen handeln. Das Schraubgetriebe kann beispielsweise einen Spindelantrieb und/oder einen Schneckenantrieb umfassen.

Benachbart sind zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Unter einer einstückig ausgebildeten Komponente wird eine solche verstanden, die genau aus einem zusammenhängenden Materialstück gefertigt ist. Unter einer einteilig gefertigten, bereitgestellten oder hergestellten Komponente oder Struktur oder einer integral mit wenigstens einer weiteren Komponente oder Struktur gefertigten, bereitgestellten oder hergestellten Komponente oder Struktur wird eine solche verstanden, die ohne eine Zerstörung oder Beschädigung einer der wenigstens zwei beteiligten Komponenten nicht von der wenigstens einen weiteren Komponente getrennt werden kann. Ein einstückiges Bauteil stellt so auch wenigstens ein integral mit einer anderen Struktur des betreffenden Bauteils gefertigtes oder einteiliges Bauteil dar.

Ein reibschlüssiger Kontakt oder eine reibschlüssige Verbindung liegt vor, wenn zwei Objekte miteinander reibschlüssig in Kontakt treten, sodass zwischen diesen eine Kraft im Falle einer Relativbewegung senkrecht zu einer Berührfläche zwischen diesen entsteht, die eine Übertragung einer Kraft, einer Drehbewegung oder eines Drehmoments ermöglicht. Hierbei kann ein Drehzahlunterschied, also beispielsweise ein Schlupf, bestehen. Neben einem solchen reibschlüssigen Kontakt umfasst ein reibschlüssiger Kontakt jedoch auch eine reibschlüssige bzw. kraftschlüssige Verbindung zwischen den betreffenden Objekten, bei denen ein entsprechender Drehzahlunterschied bzw. Schlupf im Wesentlichen nicht auftritt.

Eine kraftschlüssige oder reibschlüssige Verbindung kommt durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit im Allgemeinen eine Normalkraftkomponente zwischen den beiden Verbindungspartnern voraus.

Bei einem Ausführungsbeispiel eines Verfahrens können die zuvor genannten Verfahrensschritte in der angegebenen, jedoch auch gegebenenfalls in einer abweichenden Reihenfolge durchgeführt werden. So können gegebenenfalls einzelne Verfahrensschritte simultan, zumindest jedoch auch zeitlich überlappend erfolgen, sofern sich aus deren Beschreibung oder dem technischen Zusammenhang nichts anderes ergibt.

Nachfolgend werden unter Bezugnahme auf die beigefügten Figuren Ausführungsbeispiele näher beschrieben und erläutert.
Fig. 1 zeigt eine perspektivische Explosionsdarstellung eines Profilgleiters gemäß einem Ausführungsbeispiel mit einer Führungsstruktur und einer Einstellstruktur;
Fig. 2 zeigt eine perspektivische Darstellung des in Fig. 1 gezeigten Profilgleiters;
Fig. 3 zeigt eine Aufsicht auf den in den Fig. 1 und 2 gezeigten Profilgleiter,
Fig. 4 zeigt eine perspektivische Darstellung einer Hubsäule mit zwei Hubsäulenelementen, die als Profilelemente dienen und einem Profilgleiter, der die beiden Hubelemente zueinander linear führt;
Fig. 5 zeigt eine perspektivische Darstellung der Hubsäule aus Fig. 4 zur Illustration der Einstellbarkeit des Profilgleiters;
Fig. 6 zeigt eine schematisch vereinfachte Darstellung einer Hubsäule gemäß einem Ausführungsbeispiel; und
Fig. 7 zeigt ein Flussdiagramm eines Verfahrens gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Wie bereits eingangs kurz erwähnt wurde, werden in vielen Bereichen der Technik Profilelemente zum Tragen, Ausrichten oder Bewegen von Komponenten, Objekten, Tieren oder Menschen verwendet. Bei den Profilelementen kann es sich beispielsweise um Profilrohre, Hubsäulenelemente oder andere profilierte Bauteile handeln. Diese können beispielsweise eine größte Abmessung in einer Haupterstreckungsuchtung aufweisen. Entlang dieser Haupterstreckungsuchtung können die Profilelemente beispielsweise eine zumindest abschnittsweise gleichmäßig ausgestaltete Profilierung oder ein gleichmäßig ausgestaltetes Profil aufweisen.

Je nach konkreter Implementierung kann das Profil beispielsweise eine Führungsnut umfassen, mit deren Hilfe eine Führung eines Profilelements bezogen auf ein weiteres Profilelement möglich ist. Je nach konkreter Implementierung kann hierbei beispielsweise eine Gleitlagerung eingesetzt werden.

Eine solche kann beispielsweise mit Hilfe von einem oder mehreren Profilgleitern umgesetzt werden. Diese können für die Führung von teleskopischen Profilrohren oder anderen Hubsäulenelementen eingesetzt werden, um nur zwei Beispiele zu nennen. Die betreffenden Profilelemente weisen hierbei häufig fertigungsbedingt oder aufgrund anderer Randbedingungen Variationen hinsichtlich ihrer Ausgestaltung auf, die beispielsweise dazu führen, dass die einzelnen Profilelemente im Rahmen der spezifizierten Toleranzen voneinander abweichen. Aufgrund dieser Variationen kann es, wenn diese nicht bei der Montage berücksichtigt und ggf. ausgeglichen werden, zu Zuverlässigkeitsproblemen bzw. Funktionen hinsichtlich der Funktionalität eines Systems kommen, welches die genannten Profilelemente umfasst. Alternativ oder ergänzend kann es auch zu einer Geräuschentwicklung kommen, die zwar hinsichtlich der Funktion unkritisch ist, jedoch von Benutzern als unangenehm bzw. als auf einen drohenden Ausfall hindeutend missverstanden werden könnten.

Konventionell werden so verschiedene Profilgleiter mit unterschiedlichen Breiten vorgesehen, um unterschiedliche Variationen bzw. Toleranzen ausgleichen zu können.

Wie die nachfolgende Erörterung noch zeigen wird, kann mit Hilfe eines einstellbaren Profilgleiters gemäß einem Ausführungsbeispiel eine ggf. sogar spielfreie Montage in einem Profilrohr oder einem anderen Profilelement erzielt werden. Je nach konkreter Implementierung eines solchen einstellbaren Profilgleiters, können diese einen bestimmten Bereich eines Toleranzfeldes zwischen den Führungsflächen, die auch als Gleitflächen bezeichnet werden, in den Profilelementen und beispielsweise einem Winkelversatz einer Profilnut ausgleichen. Dadurch kann ggf. eine Spielfreiheit in einem Profilelementsatz, also beispielsweise einem Profilrohrsatz, erreicht werden, ohne dass unterschiedlich breite Profilgleiter eingesetzt werden müssen. Ein solcher Profilgleiter kann beispielsweise aus zwei Kunststoffteilen gefertigt sein, wie die nachfolgende Beschreibung noch zeigen wird, und damit beispielsweise eine Vielfalt der einzelnen unterschiedlich breiten Einzelprofilgleitern reduzieren.

Auch wenn in der nachfolgenden Beschreibung der Fokus auf dem Einsatz einstellbarer Profilgleiter für Hubsäulen liegt, also Hubsäulen mit einem integrierten Gleitsystem, können Ausführungsbeispiele eines Profilgleiters auch bei anderen Systemen, Baugruppen und Komponenten eingesetzt werden, bei denen eine lineare Bewegung zwischen zwei Profilelementen geführt werden soll. Diese Bewegung kann beispielsweise mit Hilfe eines Aktuatorsystems, die auch als Antriebseinheit bezeichnet wird, hervorgerufen werden.

Anders ausgedrückt kann, auch wenn im Nachfolgenden der Fokus der Beschreibung auf Hubsäulen liegt, ein einstellbarer Profilgleiter in sehr vielen unterschiedlichen Systemen zum Einsatz gebracht werden.

Ein Profilgleiter kann so beispielsweise für eine lineare Führung, also eine Linearführung herangezogen werden. Hierbei ist zu beachten, dass auch bei einer Linearführung bzw. linearen Führung durchaus nicht lineare Bewegungen umfasst sein können, wenn beispielsweise die betreffenden Strukturen zur Führung gebogen oder andere entsprechende Konturen aufweisen. Profilgleiter können jedoch auch zur Lagerung von Drehbewegungen eingesetzt werden. Entsprechend können Lagerungen beispielsweise als Linearlager bzw. auch als Lager zum Führen von Drehbewegungen implementiert sein.

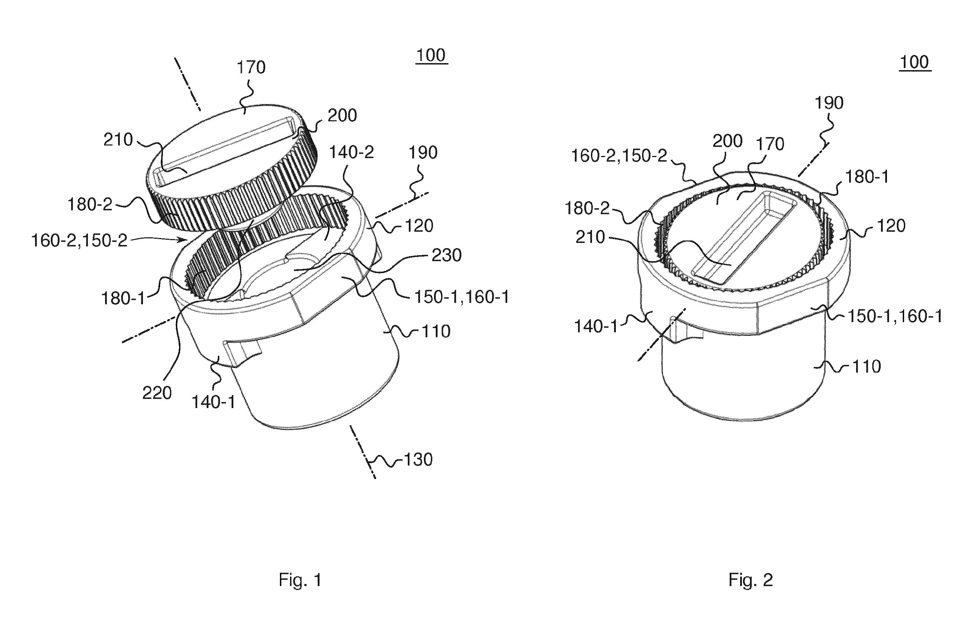

Fig. 1 zeigt eine perspektivische Explosionsdarstellung eines Profilgleiters 100 gemäß einem Ausführungsbeispiel zum linearen Führen eines Profilelements relativ zu einem weiteren Profilelement bezüglich einer Bewegungsrichtung, die jedoch zur Vereinfachung der Darstellung in Fig. 1 nicht dargestellt sind. Der Profilgleiter 100 ist hierbei in der Lage, um an dem Profilelement befestigt zu werden. Zu diesem Zweck weist der Profilgleiter 100 eine Befestigungsstruktur 110 auf, die eine hohlzylindrische Außenkontur aufweist, über die der Profilgleiter 100 beispielsweise in einer entsprechenden Bohrung des in Fig. 1 nicht gezeigten Profilelements gesteckt und damit befestigt werden kann.

Die Befestigungsstruktur 110 ist genauer gesagt bei dem hier gezeigten Beispiel eines Profilgleiters 100 hohlzylindrisch ausgeformt, kann jedoch beispielsweise nur abschnittsweise hohlzylindrisch bzw. auch vollzylindrisch ausgefüllt sein. Selbstverständlich können andere Beispiele von Profilgleitern 100 auch anders geformte Befestigungsstrukturen 110 aufweisen, mit deren Hilfe der betreffende Profilgleiter 100 dann in dem zugehörigen Profilelement befestig werden kann. So kann grundsätzlich die Befestigungsstruktur 110 jegliche Form annehmen, also beispielsweise eine polygonale Außenkontur, eine rechteckige, eine quadratische, eine dreieckige oder auch eine unregelmäßig geformte oder asymmetrische Außenkontor aufweisen. Gleiches kann ebenso für eine Innenkontur im Falle eines Hohlkörpers oder andere Komponenten der Oberfläche der Befestigungsstruktur 110 gelten.

Der Profilgleiter 100 weist darüber hinaus eine Führungsstruktur 120 auf, die im Wesentlichen ringförmig und entlang einer Hauptachse 130 der hohlzylindrischen Außenform der Befestigungsstruktur 110 derart versetzt angeordnet ist, dass auf die Führungsstruktur 120 bezüglich der Hauptachse 130 eine im vorliegenden Beispiel zweizählige Symmetrie aufweist.

Die Führungsstruktur 120 ist hierbei über zwei diametral gegenüberliegende Verbindungsabschnitte 140-1 und 140-2 mit der Befestigungsstruktur 110 verbunden. Die Verbindungsabschnitte 140 stehen hierbei radial über die Außenfläche der Befestigungsstruktur 110 hervor und brechen so die vollständige Rotationssymmetrie der Befestigungsstruktur 110 des in Fig. 1 gezeigten Profilgleiters 100.

Die Führungsstruktur 120 weist eine im Wesentlichen zylinderförmige Außenkontur auf, die jedoch von zwei abgeflachten Bereichen 150-1, 150-2 unterbrochen wird. Im Bereich der abgeflachten Bereiche 150 weist so die Führungsstruktur 120 eine geringere Erstreckung senkrecht zu der Hauptachse 130 auf als außerhalb der abgeflachten Bereiche 150. Die abgeflachten Bereiche 150 bilden hierbei zwei Gleitflächen 160-1, 160-2, die mit entsprechenden Führungsflächen einer Führungsnut eines Profilelements in Kontakt gebracht werden können. Hierzu kann eine Einstellstruktur 170 verwendet werden, die nachfolgende noch näher beschrieben wird.

Die Einstellstruktur 170 sowie der Führungsabschnitt 120 weisen hierbei jeweils eine Verzahnungsstruktur 180-1 (an der Führungsstruktur 120) und 180-2 (an der Einstellstruktur 170) auf. Die Verzahnungsstrukturen 180 sind hierbei gerade so ausgestaltet, dass diese ineinander eingreifen können und so einen Abstand der Gleitflächen 160 voneinander einstellbar machen können.

Anders ausgedrückt weist die Führungsstruktur 120 an ihrer Innenkontur die Verzahnungsstruktur 180-1 auf, die auch nur als Verzahnung bezeichnet wird, wobei die Führungsstruktur 120 gerade den Außenteil des Profilgleiters 100 bildet.

Die Einstellstruktur 170 wird entsprechend auch als Innenteil bezeichnet und weist ebenfalls die bereits zuvor genannte Verzahnung bzw. Verzahnungsstruktur 180-2 auf, die jedoch an einer Außenkontur der Einstellstruktur 170 angeordnet ist. Die Außenkontur der Einstellstruktur 170 ist hierbei unrund ausgestaltet, weist also entlang einer Richtung, die senkrecht zu der Hauptachse 130 liegt bei der in Fig. 1 gewählten Darstellung, eine größere Erstreckung oder Ausdehnung auf, als senkrecht zu den beiden vorgenannten Richtungen. Anders ausgedrückt, kann die Einstellstruktur 170 beispielsweise oval, ellipsenförmig oder mit einer anderen unrunden Außenkontur ausgestaltet sein.

In noch anderen Worten ausgedrückt, weist die Einstellstruktur 170 aufgrund ihrer unrunden Form entlang einer Richtung senkrecht zu der Hauptachse 130 eine Erstreckung, einen Radius oder einen Durchmesser auf, der größer ist als senkrecht zu den beiden vorgenannten Richtungen.

Durch diese Ausgestaltung der Einstellstruktur 170 kann so bei einer Drehung derselben um die Hauptachse 130 ein Bereich der Einstellstruktur 170 in den Bereich der den Gleitflächen 160 innen gegenüberliegenden Teilen der Verzahnungsstruktur 180-1 gebracht werden, die einen größeren Abstand von der Hauptachse 130 haben als andere Teile der Verzahnungsstruktur 180-2 der Einstellstruktur 170. Dadurch kann so eine Kraft von innen auf die Führungsstruktur 120 und insbesondere auf die Gleitflächen 160 ausgeübt werden, über die der Profilgleiter an den Abstand der in der Fig. 1 nicht gezeigten Führungsflächen der Führungsnut einstellbar ist.

Um dies zu erreichen, kann optional die Führungsstruktur 120 aus einem elastischen Werkstoff, beispielsweise einem elastischen Kunststoff gefertigt sein. Wie in Fig. 1 gezeigt ist, kann hierbei nicht nur die Führungsstruktur 120 aus dem betreffenden Material gefertigt sein, sondern ebenso die Verbindungsabschnitte 140 und/oder auch die Befestigungsstruktur 110. Anders ausgedrückt ist bei dem in Fig. 1 gezeigten Beispiel eines Profilgleiters 100 die Befestigungsstruktur 110, die Führungsstruktur und die Verbindungsstruktur 140 einstückig gefertigt. Bei anderen Beispielen eines entsprechenden Profilgleiters 100 kann selbstverständlich die Führungsstruktur 120, die Verbindungsabschnitte 140 sowie die Befestigungsstruktur 110 auch aus unterschiedlichen Materialien gefertigt werden, die beispielsweise einteilig bereitgestellt werden.

Durch diese zuvor beschriebene Ausgestaltung des Profilgleiters 100 kann so mit Hilfe der Einstellstruktur 170 und der entsprechenden Ausgestaltung der Führungsstruktur 120 ausgehend von einer Grundstellung, in der die Gleitflächen 160, einen kleinsten Abstand voneinander aufweisen, der Abstand zwischen diesen Gleitflächen vergrößert werden. Hierbei kann der Profilgleiter 100 symmetrisch zu einer Bewegungsrichtung 190 ausgestaltet sein. Die Bewegungsrichtung 190 verläuft hierbei senkrecht zu der Hauptachse 130 und im Wesentlichen parallel zu beiden Gleitflächen 160 bei dem in Fig. 1 gezeigten Beispiel eines Profilgleiters 100. Hierdurch kann es ggf. möglich sein, auftretende Scherkräfte und andere für den Profilgleiter 100 schädliche Kräfte und Momente zu reduzieren und so eine Lebensdauer des Profilgleiters 100 ggf. zu vergrößern.

Weist auch die Einstellstruktur 170 eine entsprechende symmetrische Ausgestaltung bezüglich einer Symmetrieachse auf, die senkrecht zu der Hauptachse 130 liegt, jedoch aufgrund der Drehbarkeit der Einstellstruktur 170 nicht mit der Bewegungsrichtung 190 des Profilgleiters 100 übereinstimmen muss, auf, kann so die voran beschriebene Symmetrie ggf. auch bei allen Einstellbedingungen des Profilgleiters 100, also bei allen Winkelstellungen der Einstellstruktur 170 bezogen auf die Führungsstruktur 120 realisiert werden.

Die Einstellstruktur 170 weist in einem Kopfbereich 200, der an seiner Außenflanke bzw. Außenkontur ebenso die Verzahnungsstruktur 180-2 trägt, eine Ausnehmung 210, die länglich ausgestaltet ist und beispielsweise zur Aufnahme eines Schraubenzieherkopfs ausgebildet sein kann. Die Richtung der Erstreckung der Ausnehmung 210 kann hierbei beispielsweise mit der größten Erstreckung der unrunden Außenkontur der Einstellstruktur 170 einhergehen bzw. zu dieser korrespondieren, um so während der Montage einen Hinweis auf den Grad der Abstandsvergrößerung zwischen den Gleitflächen 160 zu bieten. Hierdurch kann es also beispielsweise möglich sein, den Profilgleiter 100 auf den Abstand der in Fig. 1 nicht gezeigten Führungsflächen nach dem Befestigen des Profilgleiters 100 an dem betreffenden Profilelement demontagefrei einzustellen.

Selbstverständlich kann bei anderen Beispielen eine Profilgleiters 100 auch eine andere Ausgestaltung der Ausnehmung 210 und eine andere Ausgestaltung einer entsprechenden Struktur der Einstellstruktur 170 erfolgen, über die die Einstellstruktur 170 bezogen auf die Führungsstruktur 120 im montierten Zustand drehbar und damit der Profilgleiter 100 einstellbar ist.

Die Einstellstruktur 170 weist darüber hinaus eine optionale Zentrierstruktur 220 auf, die bei dem hier gezeigten Beispiel einstückig bzw. einteilig mit dem Kopfbereich 200 verbunden ist. Die Zentrierstruktur 220 ist hier als Zylinderfortsatz ausgestaltet, der sich entlang der Hauptachse 130 in eine zentrale Ausnehmung 230 der Befestigungsstruktur 110 hinein erstreckt. Durch die Zentrierstruktur 220 und die zentrale Ausnehmung 230 kann so ggf. eine laterale Bewegung der Einstellstruktur 170 relativ zu der Führungsstruktur 120 unterbunden werden. Hierdurch kann ggf. die symmetrische Kraftentfaltung und die symmetrische Ausgestaltung der Führungsstruktur 120 mit ihren Gleitflächen 160 verbessert werden.

Fig. 2 zeigt eine perspektivische Darstellung des Profilgleiters 100, bei der die Einstellstruktur 170 in die Führungsstruktur 120 derart eingebracht ist, sodass die Verzahnungsstrukturen 180 miteinander in Eingriff stehen.

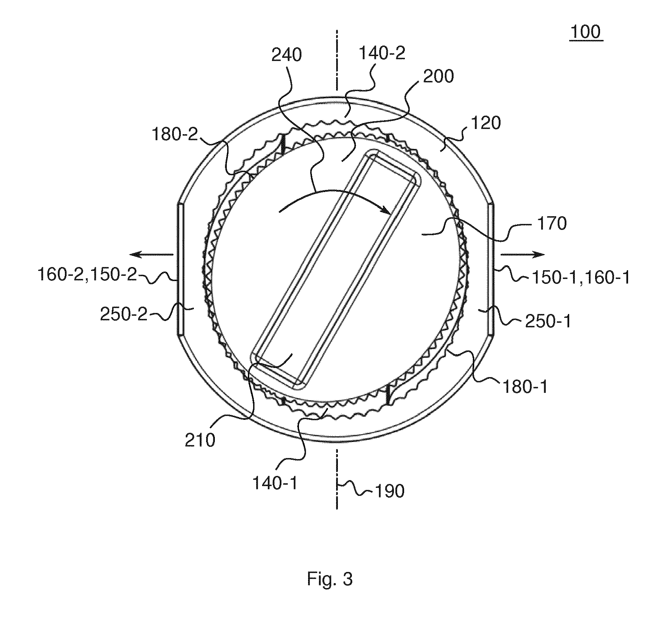

Nachfolgend wird in Zusammenhang mit Fig. 3 beschrieben, die eine Aufsicht auf den in den Fig. 1 und 2 gezeigten Profilgleiter 100 zeigt, dass durch ein Verdrehen des Innenteils, also der Einstellstruktur 170 entlang der Drehung 240 das Außenteil, also die Führungsstruktur 120 an den beiden Flächen bzw. Gleitflächen 160 ebenfalls nach außen gedrückt wird. Hierdurch kann es möglich sein, eine Anpassung an herrschende Toleranzen des Profilgleiters und einer entsprechenden Führungsnut des zugehörigen Profilelements oder Profilrohrs zu emeichen. Zu diesem Zweck sind, wie bereits zuvor beschrieben wurde, seitliche Abschnitte 250-1, 250-2, an denen die abgeflachten Bereiche 150 und die Gleitflächen 160 damit gebildet sind, flexibel bzw. elastisch ausgestaltet, sodass dort eine flexible Seitenkontur vorliegt.

Durch diese beschriebene Ausgestaltung stellt eine Möglichkeit dar, wie ein Profilgleiter 100 in die Lage versetzt wird, entlang einer senkrecht zu der Bewegungsrichtung 190 verlaufenden Richtung bei einer entsprechenden Druckbeanspruchung im Wesentlichen formstabil zu sein. Einerseits stützen sich die seitlichen Abschnitte 250 bzw. die Gleitflächen 160 über die Einstellstruktur 170 aneinander ab und damit an den in den Fig. 1 bis 3 nicht gezeigten Führungsflächen, andererseits kann bei der hier gezeigten Ausgestaltung des Profilgleiters 100 zusätzlich eine Kraftaufnahme auch über die Zentrierungsstruktur 220 und die zentrale Ausnehmung 230 und damit über die Befestigungsstruktur 110 und das ebenfalls in den Fig. 1 bis 3 nicht gezeigte Profilelement erfolgen. Der Profilgleiter 100 kann so ggf. eine lineare Führung im Wesentlichen frei von einer Relativbewegung oder relativen Bewegung der betreffenden Profilelemente zueinander senkrecht zu der Bewegungsrichtung 190 bewirken.

Der zuvor beschriebene Gleiter umfasst so also zwei beispielsweise ellipsenförmig ausgestaltete Kunststoffteile, die in einem nicht eingebauten Zustand schmaler als die auch als Gleitnut bezeichnete Führungsnut der Profilelemente (Profilrohre) ist. Nach dem Einbau kann dann über ein Bohrung die auch als ein Innenteil bezeichnete Einstellstruktur 170 bezogen auf eine auch als Außenteil bezeichnete Führungsstruktur 120 verdreht werden, sodass die Gleitflächen 160 dabei breiter werden bzw. ihr Abstand sich vergrößert und somit auf die gegebene Profilnutbreite eingestellt werden kann.

Selbstverständlich können bei anderen Beispielen eines Profilgleiters 100 die konstruktiven Ausgestaltungsmerkmale anders gewählt werden. So kann beispielsweise die Zahl der Befestigungsabschnitte 140, deren geometrische Ausgestaltung, Anordnung und andere Parameter verändert werden. Ebenso kann ggf. eine Implementierung der Verzahnungsstrukturen 180 entfallen. Ebenso kann auch eine Lösung implementiert werden, bei der gerade nicht die Einstellstruktur 170 zentriert im Inneren der Führungsstruktur 120 angeordnet ist. So können beispielsweise auch asymmetrisch implementierte Lösungen, bei denen eine Einstellung beispielsweise durch ein Verschieben und nicht durch ein Drehen der Einstellstruktur 170 erfolgen, implementiert werden.

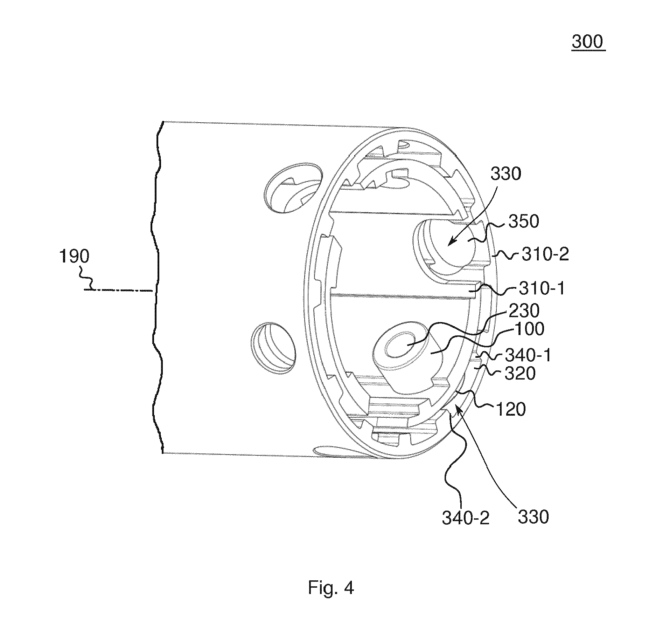

Fig. 4 zeigt eine perspektivische Darstellung eines Ausschnitts einer Hubsäule 300, die ein Profilelement 310-1 und ein weiteres Profilelement 310-2 aufweist. Das weitere Profilelement 310-2 weist hierbei eine Führungsnut 320 auf, die senkrecht zu einer Bewegungsrichtung 190 eine Bewegbarkeit der beiden Profilelemente 310 zueinander ermöglicht. In einer Befestigungsausnehmung 330 ist bei der in Fig. 4 gezeigten Ausgestaltung der zuvor gezeigte und beschriebene Profilgleiter 100 befestigt. Dieser ist nun gerade so angeordnet und ausgerichtet, dass der Profilgleiter 100 mit Führungsflächen 340-1, 340-2 des weiteren Profilelements 310-2 in Kontakt steht. Hierüber kann so in dem eingestellten Zustand des Profilgleiters 100 beispielsweise eine im Wesentlichen spielfreie Führung der beiden Profilelemente 310 relativ zueinander entlang der Bewegungsrichtung 190 umgesetzt werden.

Auch wenn Fig. 4 lediglich einen einzigen Profilgleiter 100 zeigt, können selbstverständlich bei anderen Hubsäulen 300 mehr als ein Profilgleiter, beispielsweise unterschiedlicher Typen jedoch auch gleicher Typen und Ausgestaltungen, zum Einsatz kommen.

Fig. 4 zeigt darüber hinaus eine Einstellöffnung 350, die in einer definierten Lage der beiden Profilelemente 310 zueinander einen Zugang zu der Einstellstruktur 170 ermöglicht, um so gerad den oder die Profilgleiter 100 im montierten bzw. befestigten Zustand einzustellen.

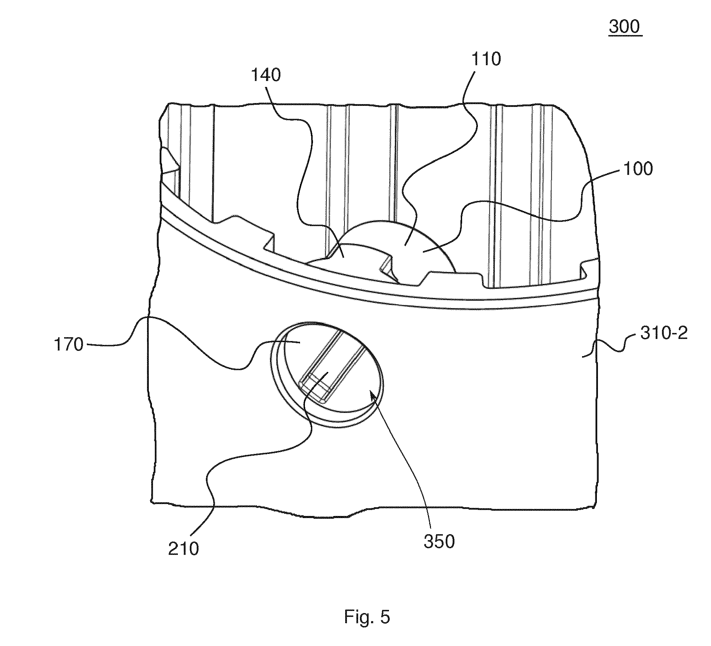

Fig. 5 zeigt so eine perspektivische Darstellung der Hubsäule 300 aus Fig. 4, bei der zur Vereinfachung der Darstellung lediglich das weitere Profilelement 310-2 eingezeichnet ist. So zeigt Fig. 4 die Einstellöffnung 350, die in der zuvor beschriebenen definierten Ausgangslage der beiden Profilelemente zueinander einen Zugang zu dem Profilgleiter und hier insbesondere zu der Einstellstruktur 170 mit der hier beispielsweise implementierten Ausnehmung 210 für einen Schraubenzieher oder ein ähnliches Werkzeug vorgesehen ist. Das Profilelement 310-1 wird auch als Innenprofil, das weitere Profilelement 310-2 als Außenprofil bezeichnet. Die Führungsnut 320 wird auch kurz als Profilnut des Außenprofils bezeichnet. Fig. 5 zeigt so eine Möglichkeit, wie mit Hilfe der Einstellöffnung 350 eine Einstellbarkeit des Profilgleiters 100 auch im montierten Zustand umgesetzt werden kann.

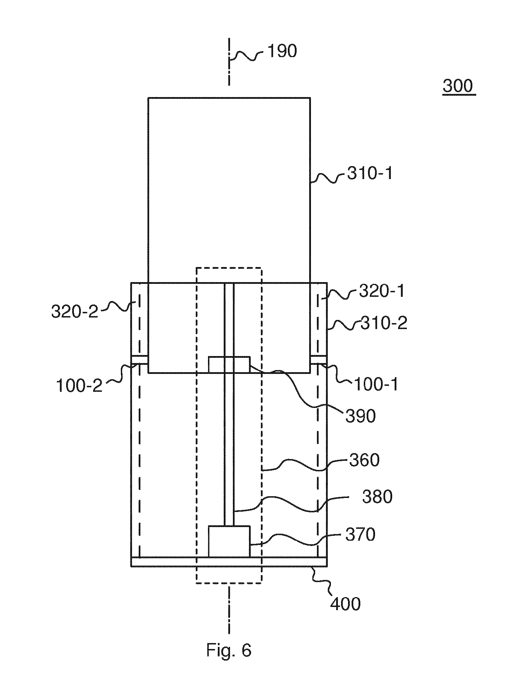

Fig. 6 zeigt eine schematische Darstellung einer Hubsäule 300, die eine wiederum innen angeordnetes Profilelement 310-1 und ein weiteres Profilelement 310-2 aufweist, welches radial außerhalb des Profilelements 310-1 angeordnet ist und dieses entsprechend zumindest teilweise umgibt. Selbstverständlich können bei anderen Beispielen einer Hubsäule 300 die Profilelemente 310-1, 310-2 auch hinsichtlich ihrer Anordnung innen-außen vertauscht sein.

Das weitere Profilelement 310-2 weist wiederum Führungsnute 320-1, 320-2 auf, die sich entlang der Bewegungsrichtung 190 erstrecken, entlang derer die beiden Profilelemente 310 auch zueinander beweglich sind.

Die Hubsäule 300 umfasst ferner einen oder mehrere Profilgleiter 100, wie diese beispielsweise zuvor beschrieben wurden. Bei der hier gezeigten Ausgestaltung der Hubsäule 300 in Fig. 6 umfasst diese wenigstens zwei Profilgleiter 100-1, 100-2, die beispielsweise identisch, jedoch ggf. auch abweichend voneinander ausgeführt sein können. Über entsprechende Strukturen in dem Profilelement 310-1 sind die Profilgleiter 100 hierbei mit diesem bzw. an diesem befestigt und so angeordnet, dass diese mit den durch die Führungsnute 320 gebildeten Führungsflächen des weiteren Profilelements 310-2 in Kontakt stehen.

Um nun eine Bewegbarkeit der Hubsäule 300 zu ermöglichen, weist diese ferner eine optionale Antriebseinheit 360 auf, die in der Lage ist, das Profilelement 310-1 bezogen auf das weitere Profilelement 310-2 entlang der Bewegungsrichtung 190 zu bewegen. Zu diesem Zweck weist die hier gezeigte Antriebseinheit 360 einen Motor 370 auf, bei dem sich beispielsweise um einen Elektromotor, jedoch auch um einen pneumatischen, hydraulischen oder anders betriebenen Motor handelt, der ausgebildet ist, um eine Welle 380 in eine Rotationsbewegung zu versetzen. Die Antriebseinheit 360 weist ferner ein Schraubgetriebe 390 auf, welches in der Lage ist, die Rotationsbewegung der Welle 380 in eine lineare Bewegung entlang der Bewegungsrichtung 190 umzusetzen. Das Schraubgetriebe 390 kann beispielsweise einen Spindelantrieb oder eine Schnecke umfassen. Selbstverständlich können jedoch auch andere Konstruktionen einer Antriebseinheit 360 verwendet werden.

Der Einsatz eines einstellbaren Profilgleiters, wie er zuvor beschrieben wurde, kann in diesem Zusammenhang nicht nur eine ggf. einfachere Montage und eine Einsparung von Teilen ermöglichen, sodass unterschiedlich breite Profilgleiter ggf. vermieden werden können, die bei einer starren Konstruktion ggf. zu implementieren sind, es kann vielmehr auch aufgrund der ggf. möglichen spielfreien Implementierung eine durch den Motor 370 aufgeprägte Drehbewegung über eine Bodenplatte 400 abgegeben werden, ohne dass das Profilelement 310-1 bei der hier gezeigten Ausführung eine merkliche, spielbedingte Rotationsbewegung erhält. Die Bodenplatte 400 kann beispielsweise zur Aufnahme des Motors 370 jedoch auch zur Montage des weiteren Profilelements 310-2 dienen.

Auch hier können selbstverständlich bei anderen Beispielen von Hubsäulen 300 andere konstruktive Ausgestaltungen gewählt werden.

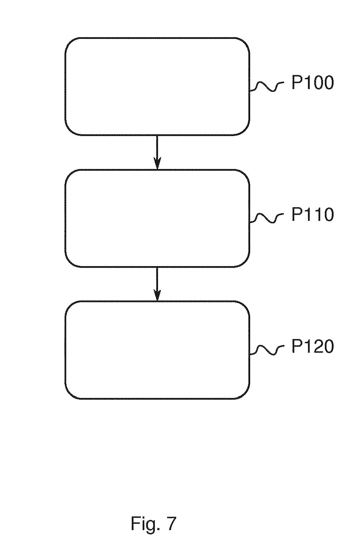

Fig. 7 zeigt schließlich ein Flussdiagramm eines Verfahrens zum Montieren einer Hubsäule. In einem Prozess P100 wird zunächst ein Profilgleiter 100 an einem Profilelement 310-1 befestigt. Das Verfahren umfasst ferner in einem Prozess P110 ein wenigstens teilweise Einbringen des Profilgleiters 100 in eine Führungsnut eines weiteren Profilelements, das bezüglich der Bewegungsrichtung 190 relativ zu dem Profilelement 310-1 bewegbar ist. In einem Prozess P 120 kann dann der Profilgleiter 100 eingestellt werden, um diesen mit der Führungsfläche der Führungsnut 320 des weiteren Profilelements 310-2 in Kontakt zu bringen und um diesen auf einen Abstand der Führungsfläche zu einer weiteren Führungsfläche der Führungsnut 320 einzustellen.

Bei einem Ausführungsbeispiel eines Verfahrens können die zuvor genannten Verfahrensschritte in der angegebenen, jedoch auch gegebenenfalls in einer abweichenden Reihenfolge durchgeführt werden. So können gegebenenfalls einzelne Verfahrensschritte simultan, zumindest jedoch auch zeitlich überlappend erfolgen, sofern sich aus deren Beschreibung oder dem technischen Zusammenhang nichts anderes ergibt.

Durch den Einsatz eines Ausführungsbeispiels kann ggf. ein Kompromiss hinsichtlich herstellungsbedingter Variationen und einer möglichst einfachen Herstellung und Montage verbessert werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 100: Profilgleiter
- 110: Befestigungsstruktur
- 120: Führungsstruktur
- 130: Hauptachse
- 140: Verbindungsabschnitt
- 150: abgeflachter Bereich
- 160: Gleitfläche
- 170: Einstellstruktur
- 180: Verzahnungsstruktur
- 190: Bewegungsrichtung
- 200: Kopfbereich
- 210: Ausnehmung
- 220: Zentrierstruktur
- 230: zentrierte Ausnehmung
- 240: Drehung
- 250: seitlicher Abschnitt
- 300: Hubsäule
- 310: Profilelement
- 320: Führungsnut
- 330: Befestigungsausnehmung
- 340: Führungsfläche
- 350: Einstellöffnung
- 360: Antriebseinheit
- 370: Motor
- 380: Welle
- 390: Schraubgetriebe
- 400: Bodenplatte

## Patentansprüche

1. Profilgleiter (100) zum linearen Führen eines Profilelements (310) relativ zu einem weiteren Profilelement (310) bezüglich einer Bewegungsrichtung (190), wobei der Profilgleiter (100) ausgebildet ist, um an dem Profilelement (310) befestigt zu werden und um mit einer Führungsfläche (340) einer Führungsnut (320) des weiteren Profilelements (310) in Kontakt zu stehen, und wobei der Profilgleiter (100) ferner ausgebildet ist, um auf einen Abstand der Führungsfläche (340) der Führungsnut (320) zu einer weiteren Führungsfläche (340) der Führungsnut (320) einstellbar zu sein.

2. Profilgleiter (100) nach Anspruch 1, der ausgebildet ist, um auf den Abstand der Führungsfläche (340) zu der weiteren Führungsfläche (340) nach dem Befestigen des Profilgleiters (100) an dem Profilelement (310) demontagefrei einstellbar ist.

3. Profilgleiter (100) nach einem der vorhergehenden Ansprüche, der ausgebildet ist, um entlang einer senkrecht zu der Bewegungsrichtung (190) verlaufenden Richtung bei Druckbeanspruchung im Wesentlichen formstabil zu sein.

4. Profilgleiter (100) nach einem der vorhergehenden Ansprüche, der ausgebildet ist, um gleichzeitig mit der Führungsfläche (340) und der weiteren Führungsfläche (340) der Führungsnut (320) in Kontakt zu stehen.

5. Profilgleiter (100) nach Anspruch 4, der eine Führungsstruktur (120) und eine Einstellstruktur (170) aufweist, wobei die Führungsstruktur (120) ausgebildet ist, um mit der Führungsfläche (340) und der weiteren Führungsfläche (340) in Kontakt zu stehen, und wobei die Einstellstruktur (170) ausgebildet ist, um eine Position einer Gleitfläche (160) der Führungsstruktur (120), die ausgebildet ist, um mit der Führungsfläche (340) in Kontakt zu treten, und einer weiteren Gleitfläche (160) der Führungsstruktur (120), die ausgebildet ist, um mit der weiteren Führungsfläche (340) in Kontakt zu treten, einstellbar zu machen.

6. Profilgleiter (100) nach Anspruch 5, bei dem die Führungsstruktur (120) bezüglich der Bewegungsrichtung (190) im Wesentlichen symmetrisch ausgebildet ist.

7. Profilgleiter (100) nach einem der Ansprüche 5 oder 6, bei dem die Einstellstruktur (170) und die Führungsstruktur (120) ausgebildet sind, um ausgehend von einer Grundstellung, in der die Gleitfläche (160) und die weitere Gleitfläche (160) einen kleinsten Abstand voneinander aufweisen, den Abstand zwischen der Gleitfläche (160) und der weiteren Gleitfläche (160) zu vergrößern.

8. Profilgleiter (100) nach einem der Ansprüche 5 bis 7, bei dem die Einstellstruktur (170) und die Führungsstruktur (120) jeweils eine Verzahnungsstruktur (180) aufweisen, über die die Einstellstruktur (170) und die Führungsstruktur (120) ineinander eingreifen, um den Abstand der Gleitfläche von der weiteren Gleitfläche einstellbar zu machen.

9. Hubsäule (300), mit folgenden Merkmalen:
einem Profilelement (310);
einem weiteren Profilelement (310), das eine Führungsnut (320) mit einer Führungsfläche (340) aufweist und relativ zu dem Profilelement (310) entlang einer Bewegungsrichtung (190) bewegbar ist; und
und wenigstens einen Profilgleiter (100) gemäß einem der vorhergehenden Patentansprüche, der an dem Profilelement (310) befestigt ist und so angeordnet ist, dass der wenigstens eine Profilgleiter (100) mit der Führungsfläche (120) der Führungsnut (320) des weiteren Profilelements (310) in Kontakt steht.

10. Verfahren zum Montieren einer Hubsäule, umfassend:
Befestigen (P100) eines Profilgleiters (100) an einem Profilelement (310);
wenigstens teilweises Einbringen (P110) des Profilgleiters (100) in eine Führungsnut (320) eines weiteren Profilelements (310), das bezüglich einer Bewegungsrichtung (190) relativ zu dem Profilelement (120) bewegbar ist; und
Einstellen (P120) des Profilgleiters (100), um diesen mit einer Führungsfläche (340) der Führungsnut (320) des weiteren Profilelements (310) in Kontakt zu bringen und um diesen auf einen Abstand der Führungsfläche (340) zu einer weiteren Führungsfläche (340) der Führungsnut (320) einzustellen.
